# EUROPÄISCHE PATENTSCHRIFT

(11) **EP 0 612 945 B1**
(45) Veröffentlichungstag und Bekanntmachung des Hinweises auf die Patenterteilung: **08.05.1996**
(21) Anmeldenummer: 94200493.8
(22) Anmeldetag: 25.02.1994
(51) Int. Cl.: F16L 3/133

(54) **Vorrichtung zum Aufhängen einer liegenden Rohrleitung an einer Wand**
Device for the attachment of a horizontal pipe to a wall
Dispositif pour la fixation d'un tuyau horizontal à une paroi

(30) Priorität: 25.02.1993 NL 9300358
(43) Veröffentlichungstag der Anmeldung: 31.08.1994
(73) Patentinhaber: J. van Walraven B.V., NL-3641 RK Mijdrecht (NL)
(72) Erfinder: van Walraven, Jan, NL-3641 GP Mijdrecht (NL)
(74) Vertreter: Boelsma, Gerben Harm, Ir.

(56) Entgegenhaltungen:
- AU-B- 574 396
- DE-U- 8 535 534
- GB-A- 991 105
- US-A- 4 765 577

## Beschreibung

Die Erfindung bezieht sich auf eine Vorrichtung zum Aufhängen einer liegenden Rohrleitung nach dem Oberbegriff des Patentanspruchs 1.

Eine Vorrichtung dieser Art ist bekannt aus dem DE-U-85 35 534.

Zum Aufhängen von etwa waagerecht verlaufenden Rohrleitungen an einer Wand werden Schellen verschiedener Art verwendet, welche die aufzuhängende Rohrleitung umfassen und ihrerseits zum Beispiel mittels vom Schellenkörper ausragender Gewindestangen an der Tragwand, zum Beispiel einer senkrechten Wand oder einer Decke, befestigt werden.

Vor allem bei Rohrleitungen aus Kunststoff, wie Polyäthylen, besteht die Neigung zum Durchhängen der aufgehängten Röhrleitung zwischen den aufeinander folgenden Aufhängestellen, welche Neigung um so stärker ist je nachdem der Abstand zwischen den Aufhängestellen grösser ist und je nachdem die Wandstärke der Rohrleitung kleiner ist.

Um eine derartige, unerwünschte Durchhängung der aufgehängten Rohrleitung zu vermeiden bezw. zu reduzieren wird die aufzuhängende Rohrleitung in Stützschalen der Art nach dem obigen Gebrauchsmuster gelegt, wobei in jeder Aufhängestelle Rohrleitung und Stützschale insgesamt von der betreffenden Rohrschelle umfasst werden. Die Stützschalen bestehen aus verhältnismässig dünnem, gegen Korrosion geschütztem Blech und erstrecken sich in der Praxis, im Querschnitt gesehen, über einen Kreisbogen, der ein wenig grösser als 180° ist, sodass sie die aufzuhängende Rohrleitung "schnappend" umfassen. Sie werden in Längen von z.B. 1 Meter, welche einander an den Enden gegebenenfalls überlappen können, unterhalb der aufzuhängenden Rohrleitung angeordnet.

Derartige Stützschalen haben ihren Nutzen insbesondere bewiesen bei Kunststoff-Rohrleitungen, die zum Transport von Flüssigkeiten von hoher Temperatur verwendet werden und die infolge der hohen Flüssigkeitstemperatur eine verstärkte Neigung zum Durchhängen zeigen.

Ein nachteiliger Umstand dabei ist, dass die oben liegende, nicht von der (den) Stützschale(n) bedeckte Oberfläche der Rohrleitung schneller abkühlt als die in der (den) Stützschale(n) abgedeckt liegende Oberfläche der Rohrleitung, wodurch unterschiedliche Wärme-Ausdehnungen zwischen den oberen und unteren Seiten der Rohrleitung entstehen.

Erfindungsgemäss wird der Unterschied in Wärme-Ausdehnung zwischen Oben- und Unterseiten der aufzuhängenden Rohrleitung zu einem annehmbaren Ausmass durch die Merkmale des Patentanspruchs 1 reduziert.

Zu bemerken ist, dass in der US-A-4 765 577 eine Rohraufhängevorrichtung mit einer im Querschnitt U-förmigen Stützschale offenbart ist, wobei in der beiden Schenkeln der U, d.h. in dem nicht mit dem Rohr in Berührung stehenden Teil der Stützschale, Öffnungen vorgesehen sind, welche zum Hindurchstecken von Befestigungsbändern und sonstigen Befestigungsmitteln dienen.

Ferner offenbart die AU-B-574 396 eine im Querschnitt rechteckig-U-förmige Kabelrinne mit im Boden derselben vorgesehenen Langlöchern, welche zum Zusammenarbeiten mit die einzelnen Kabel festlegenden Kunststoffbändern dienen.

Vorzugsweise haben die Perforationen die Gestalt von in der Längsrichtung der Schale verlaufenden Langlöchern, welche Langlöcher in den Böden von radial nach aussen gedrückten länglichen Vertiefungen vorgesehen sind.

In dieser Ausführung wird die Kühlwirkung der Perforation zusätzlich erhöht, während die Vertiefungen zugleicherzeit eine Versteifung der Stützschale bewirken.

In einer praktischen Ausbildung sind die Langlöcher bezw. Vertiefungen in einer Anzahl von symmetrisch mit Bezug auf die senkrechte Mittellängsebene der Stützschale liegenden Längsreihen angeordnet.

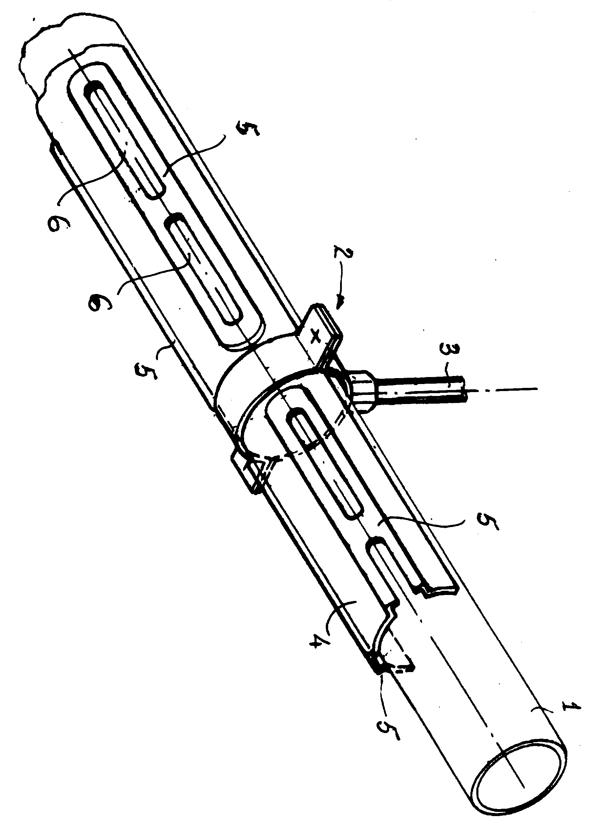

Die Erfindung wird unten an Hand der Zeichnung mit einem Ausführungsbeispiel näher erläutert.

Die Zeichnung zeigt eine Perspektivansicht eines Abschnitts einer Kunststoff-Rohrleitung 1, welche mittels einer schematisch mit 2 bezeichneten Rohrschelle und einer von dieser ausragenden Gewindestange 4 an einer nicht dargestellten Wand (Decke) aufgehängt werden muss. Die Kunststoff-Rohrleitung 1 liegt dabei in einer etwa halbzylindrischen Stützschale 4 aus gegen Korrosion geschütztem dünnem Blech, welche Stützschale sich erstreckt über einen Kreisbogen, der ein wenig grösser als 180° ist.

In der Stützschale 4 sind zwei Längsreihen von länglichen, nach aussen gerichteten Ausstülpungen 5 vorgesehen, in deren Böden zwei in der Längsrichtung hintereinanderliegende Langlöcher 6 vorgesehen sind. Die beiden Längsreihen von Ausstülpungen 5 befinden sich an beiden Seiten der vertikalen Mittellängsebene der Stützschale 4 und zwar in einem Kreisbogenabstand, der in der Grössenordnung von 90° liegt. Der Abstand zwischen zwei aufeinanderfolgenden Ausstülpungen 5 in beiden Reihen von Ausstülpungen ist grösser als die Breite der Rohrschelle 2, sodass die Rohrschelle um einen nicht ausgestülpten Abschnitt der Stützschale angebracht werden kann.

Die Längsausstülpungen 5 mit den in deren Böden vorgesehenen Langlöchern 6 verbessern die Kühlung des unteren Teils der in der Stützschale liegenden Kunststoff-Rohrleitung 1 und bewirken ausserdem eine wesentliche Versteifung der Stützschale 4.

Er wird klar sein, dass die von den Langlöchern 6 gebildeten Perforationen und die Ausstülpungen 5 auch in einem anderen Muster und in mehr als zwei Längsreihen angeordnet werden können.

## Patentansprüche

1. Vorrichtung zum Aufhängen einer liegenden Rohrleitung (1) an einer Wand, bestehend aus einer die Rohrleitung (1) umfassenden Schelle (2) und einer zwischen der Rohrleitung (1) und dem unterliegenden Abschnitt der Rohrschelle einzufügenden, eine etwa halbzylindrische Auflagefläche für die Rohrleitung (1) aufweisenden Stützschale, (4), derer Länge um ein Mehrfach grösser als die Breite der Rohrschelle (2) ist, dadurch gekennzeichnet, dass in der etwa halb-zylindrischen Auflagefläche Perforationen (6) vorgesehen sind.

2. Vorrichtung nach Anspruch 1, dadurch gekennzeichnet, dass die Perforationen (6) die Gestalt von in der Längsrichtung der Schale verlaufenden Langlöchern haben, welche in den Böden von radial nach aussen gedrückten länglichen Vertiefungen (5) angeordnet sind.

3. Vorrichtung nach Anspruch 2, dadurch gekennzeichnet, dass die Langlöcher (6) bezw. Vertiefungen (5) in einer Anzahl von symmetrisch mit Bezug auf die senkrechte Mittellängsebene der Stützschale liegenden Längsreihen angeordnet sind.

4. Vorrichtung nach Anspruch 3, dadurdh gekennzeichnet, dass die Langlöcher (6) bezw. Vertiefungen (5) in zwei an beiden Seiten der vertikalen Längsebene der Stützschale liegenden Längsreihen angeordnet sind, welche Längsreihen untereinander über einen Kreisbogen von etwa 90° versetzt liegen.

5. Vorrichtung nach Ansprüchen 2-4, dadurch gekennzeichnet, dass der Abstand zwischen in der Längsrichtung aufeinanderfolgenden Vertiefungen (5) grösser als die achsiale Breite einer Rohrschelle (2) ist.

## Claims

1. A device for suspending a horizontal pipe (1) from a wall, comprising a clip (2) which embraces the pipe (1) and a support shell (4) which is to be inserted between the pipe (1) and the underlying portion of the pipe clip and which has an approximately semicylindrical support surface for the pipe (1) and whose length is a multiple greater than the width of the pipe clip (2), characterised in that perforations (6) are provided in the approximately semicylindrical support surface.

2. A device according to claim 1 characterised in that the perforations (6) are in the form of slots which extend in the longitudinal direction of the shell and which are arranged in the bottoms of radially outwardly pressed elongate depressions (5).

3. A device according to claim 2 characterised in that the slots (6) or depressions (5) are arranged in a number of longitudinal rows which are disposed symmetrically with respect to the perpendicular longitudinal central plane of the support shell.

4. A device according to claim 3 characterised in that the slots (6) or depressions (5) are arranged in two longitudinal rows which are disposed at both sides of the vertical longitudinal plane of the support shell, which longitudinal rows are displaced relative to each other over a circular arc of about 90°.

5. A device according to claims 2 to 4 characterised in that the spacing between depressions (5) which occur in succession in the longitudinal direction is greater than the axial width of a pipe clip (2).

## Revendications

1. Dispositif pour la fixation d'un tuyau horizontal (1) à une paroi, comportant une bride (2) entourant le tuyau (1) et une cuvette de protection (4) insérée entre le tuyau (1) et la section inférieure de la bride du tuyau, cette cuvette comportant une surface d'appui sensiblement semi-cylindrique, et la longueur de cette cuvette étant un multiple de la largeur de la bride (2) du tuyau, caractérisé en ce que dans la surface d'appui sensiblement semi-cylindrique sont prévues des perforations (6).

2. Dispositif selon la revendication 1, caractérisé en ce que les perforations (6) ont la forme de trous oblongs s'étendant dans la direction longitudinale de la coquille et ces trous oblongs sont agencés dans les fonds de renfort allongés (5) repoussés radialement vers l'extérieur.

3. Dispositif selon la revendication 2, caractérisé en ce que les trous oblongs (6) ou les renforts (5) sont disposés en une série de rangées longitudinales s'étendant symétriquement par rapport au plan médian longitudinal vertical de la cuvette de protection.

4. Dispositif selon la revendication 3, caractérisé en ce que les trous oblongs (6) ou les renforts (5) sont disposés en deux rangées longitudinales s'étendant de chaque côté du plan longitudinal vertical de la coquille de protection, et ces rangées longitudinales sont décalées l'une de l'autre d'un arc de cercle d'environ 90°.

5. Dispositif selon les revendications 2 et 4, caractérisé en ce que l'écart entre les renforts (5) qui se succèdent dans la direction longitudinale est supérieur à la largeur axiale d'une bride (2) du tuyau.
